# EUROPÄISCHE PATENTANMELDUNG

(11) **EP 2 277 649 A1**
(43) Veröffentlichungstag der Anmeldung: **26.01.2011**
(21) Anmeldenummer: 10170541.6
(22) Anmeldetag: 22.07.2010
(51) Int. Cl.: B23C 3/12, B21B 15/00

(54) **Verfahren zur Herstellung einer Metallbandkante**

(30) Priorität: 23.07.2009 DE 102009026235
(71) Anmelder: Hydro Aluminium Deutschland GmbH, 53117 Bonn (DE)
(72) Erfinder: Denkmann, Volker, 47906 Kempen (DE); Kuppermann, Gunnar, 21339 Lüneburg (DE); Aretz, Holger, 53508 Mayschoß (DE)
(74) Vertreter: Cohausz & Florack

(57) **Zusammenfassung**

Die Erfindung betrifft ein Verfahren zur Herstellung eines Metallbandes (1), bei welchem das Metallband mindestens einem Kaltwalzschritt unterzogen wird sowie eine Vorrichtung (3,3a) zur Durchführung des erfindungsgemäßen Verfahrens. Die Aufgabe, ein Verfahren zur Herstellung eines Metallbandes zur Verfügung zu stellen, welches die Gefahr von Bandrissen bei nachfolgenden Walzschritten drastisch verringert, wird mit einem erfindungsgemäßen Verfahren dadurch gelöst, dass die Kante des Metallbandes vor einem Walzschritt durch ein spanabhebendes Verfahren besäumt wird.

## Beschreibung

Die Erfindung betrifft ein Verfahren zur Herstellung eines Metallbandes, bei welchem das Metallband mindestens einem Kaltwalzschritt unterzogen wird sowie eine Vorrichtung zur Durchführung des erfindungsgemäßen Verfahrens.

Die Herstellung eines Metallbandes unterteilt sich grundsätzlich in zwei Schritte. Einerseits in die Erzeugung eines Warmbandes durch reversierendes Warmwalzen eines Walzbarrens. Alternativ kann das Warmband auch durch kontinuierliches Gießen und gleichzeitiges, kontinuierliches Warmwalzen erzeugt werden. Im zweiten Schritt wird das Warmband auf Enddicke kaltgewalzt. Beim Kaltwalzen, wie auch beim Warmwalzen, führt die Dickenabnahme zu einer Längenzunahme und gleichzeitig zu einer Breitenzunahme. Aufgrund der geringen Duktilität des Metalls beim Kaltwalzen werden höhere Zugspannungen in den Kantenbereichen des Metallbandes erzeugt, welche unter Umständen Ursache für Kantenrisse oder sogar Bandrisse sein können. Diese treten bei unbehandelten Metallbandkanten vor allem beim Kaltwalzen von Aluminium und Aluminiumlegierungen auf. Bei der Verarbeitung von Aluminium stellen Bandrisse ein nicht unerhebliches Sicherheitsrisiko in der Fertigung dar. Zwischen zwei Walzstichen werden zur Vermeidung dieser Risiken Zwischenbesäumungen durchgeführt, um rissbehaftete Randbereiche zu entfernen. Der Materialverbrauch aufgrund der Zwischenbesäumungen ist entsprechend hoch. Darüber hinaus beschränkt die Gefahr von Bandrissen die maximale Dickenabnahme während eines Walzstichs, da Bandkantenrisse aufgrund der starken Deformation der Kantenbereiche mit einer höheren Wahrscheinlichkeit entstehen können. Es hat sich bei Untersuchungen herausgestellt, dass die bisher zur Besäumung verwendeten Rollscheren keine idealen Metallbandkanten erzeugen können. Die Rollscheren scheren die zu besäumende Metallbandkante ab, was bekanntermaßen zur Ausbildung einer Einzugszone sowie zu einer rauen Bruchzone an der Metallbandkante führt. Es wurde herausgefunden, dass diese Zonen die Entstehung von Bandrissen in folgenden Walzschritten begünstigen. Darüber hinaus erfolgt eine Verfestigung des Materials im Bereich der Metallbandkante aufgrund der Stauchung beim Abscheren. Ein weiterer Nachteil ist, dass Rollscheren zur Durchführung eines sauberen Schnitts eine bestimmte Materialbreite, die abgeschert werden muss, benötigen. Somit ist der Materialverbrauch bei den Zwischenbesäumungen relativ hoch.

Die vorliegende Erfindung hat sich somit zur Aufgabe gestellt, ein Verfahren zur Herstellung eines Metallbandes zur Verfügung zu stellen, welches die Gefahr von Bandrissen bei einem Walzschritt drastisch verringert. Ferner soll eine kostengünstige Vorrichtung zur Durchführung des erfindungsgemäßen Verfahrens vorgeschlagen werden.

Gemäß einer ersten Lehre der vorliegenden Erfindung wird die Aufgabe dadurch gelöst, dass die Kante des Metallbandes vor einem Kaltwalzschritt durch ein spanabhebendes Verfahren besäumt wird.

Im Unterschied zu dem bisher verwendeten Abscheren der Metallkante durch Rollscheren wird erfindungsgemäß ein spanabhebendes Verfahren verwendet, um die Metallbandkante zu besäumen, bei welchem der Materialabtrag durch Heraustrennen einzelner Späne mit einer Schneide erfolgt. Beim Rollscheren wir eine durchgehende Materialbahn abgetrennt. Bei der spanabhebenden Bearbeitung der Metallbandkante findet einerseits keine Kaltverformung des Kantenbereichs des Metalls statt, denn die Schneide trennt die Späne heraus, ohne dass es zu einer Stauchung des verbleibenden Materials kommt. Der Kantenbereich hat damit aufgrund der nicht auftretenden Kaltverformung identische Umformeigenschaften zum Rest des Metallbandes. Darüber hinaus wird die Entstehung einer rauen Bruchzone sowie einer Einzugszone verhindert, so dass eine Dehnung der Metallbandkante aufgrund der Dickenverringerung im Walzschritt nicht unkontrolliert zum Einreißen der Metallbandkante führt. Das Auftreten von Bandkantenrissen wird damit effektiv reduziert. Die Metallbandkanten sind vorzugsweise auch gratfrei, was zu einem weiter verbesserten Verhalten in nachfolgenden Walzschritten führt.

Besonders gute Ergebnisse konnten dadurch erzielt werden, dass gemäß einer ersten Ausgestaltung des erfindungsgemäßen Verfahrens die spanabhebende Besäumung der Kante des Metallbandes durch Fräsen erfolgt. Beim Fräsen erfolgt die spanabhebende Bearbeitung der Metallbandkante durch eine rotierende Schneide. Vorzugsweise kann ein rotierender Planmesserkopf oder andere Fräser, beispielsweise Fräser zum Schlichtfräsen verwendet werden, um besonders gute Oberflächeneigenschaften der Metallbandkante zu erzielen. Bei der Verwendung eines Fräskopfes können auch hohe Geschwindigkeiten bei der Besäumung der Metallbandkante erzielt werden, so dass das erfindungsgemäße Verfahren auch sehr wirtschaftlich ist. Schlichtfräser können zu Erzielung einer besonders hohen Qualität der Metallbandkanten verwendet werden. Es ist auch denkbar, dass gleichzeitig mehrere Fräsköpfe eine Metallbandkante besäumen.

Gemäß einer weiteren Ausgestaltung des erfindungsgemäßen Verfahrens ist die Kante des Metallbandes nach dem Besäumen rechtwinklig. Es hat sich herausgestellt, dass eine rechtwinklige Metallbandkante ideal für nachfolgende Walzschritte ist und die Bandrissneigung weiter gesenkt wird.

Um den Materialverbrauch bei der Besäumung der Metallbandkante zu verringern, beträgt die Schnitttiefe der Besäumung kleiner als 3 mm, vorzugsweise 1 bis 2 mm. Entsprechende Schnitttiefen bzw. Frästiefen konnten mit dem bisherigen Rollscherverfahren bei der Besäumung der Metallbandkante nicht erzielt werden, so dass der Materialverbrauch des Besäumungsschritts deutlich gesenkt werden kann.

Vorzugsweise wird ein Warmband aus Metall besäumt, d.h. das Metallband wurde vor dem Besäumen mindestens einem Warmwalzstich unterzogen. Warmbänder werden beim anschließenden Kaltwalzen hohen Umformgraden mit erheblichen Belastungen der Metallbandkante unterzogen. Warmbänder mit spanabhebend besäumter Metallbandkante können daher beispielsweise mit einer minimalen Anzahl an Kaltwalzstichen und unter minimalem Materialverlust durch Besäumungen weiter verarbeitet werden.

Gemäß einer weiteren Ausgestaltung des erfindungsgemäßen Verfahrens wird die spanabhebende Besäumung der Kante im Coil des Metallbandes oder am abgewickelten Metallband durchgeführt. Die Besäumung der Metallbandkante im Coil ermöglicht eine von weiteren Walzschritten, insbesondere von der Walzgeschwindigkeit unabhängigen Erzeugung der verbesserten Metallbandkante. Die Besäumung im Coil erfolgt beispielsweise auf einer separaten Vorrichtung, so dass eine einfache Integration dieser Ausführungsform des erfindungsgemäßen Verfahrens in bestehende Fertigungsabläufe erfolgen kann.

Die spanabhebende Besäumung der Kante am abgewickelten Metallband erfolgt dagegen beispielsweise unmittelbar vor einem Walzschritt nach dem Abwickeln des Bandes von einer Abwickelhaspel. Da eine separate Vorrichtung nicht unbedingt benötigt wird, kann beispielsweise anstelle der Rollscheren die spanabhebende Besäumung beispielsweise unter Verwendung von Fräsköpfen durchgeführt werden.

Die Besäumung der Metallbandkante am Band kann zwar auch unabhängig vom nächsten Walzschritt erfolgen, beispielsweise indem das Band von einem ersten Coil abgewickelt und auf ein weiteres Coil aufgewickelt wird. Vorteilhaft ist jedoch, die spanabhebende Besäumung der Kante des Metallbandes in einer Vorrichtung zur Durchführung des nächsten Walzschrittes durchzuführen, um weitere Arbeitsschritte einzusparen.

Die Besäumung der Schnittkante des Metallbandes im Coil erfolgt gemäß einer weiteren Ausgestaltung des erfindungsgemäßen Verfahrens dadurch, dass das Coil in Rotation versetzt wird und die Kante des Metallbandes auf einer oder beiden Stirnseiten des Coils spanabhebend besäumt wird. Hierzu wird beispielsweise das Mittel zur spanabhebenden Besäumung der Metallbandkante von außen ins Zentrum des Coils bewegt, so dass aufgrund der Rotation des Coils das gesamte Metallband besäumt wird. Die Besäumung der Metallbandkante im Coil ist zudem besonders schnell, da beispielsweise bei Verwendung geeigneter, spanabhebender Besäumungsmittel gleichzeitig mehrere Metallbandlagen gleichzeitig besäumt werden können.

Wird die spanabhebende Besäumung am Coil des Metallbandes durchgeführt, wobei das Coil des Metallbandes fixiert ist und die Kante des Metallbandes auf einer oder beiden Stirnseiten des Coils spanabhebend besäumt wird, so kann gemäß einer weiteren Ausführungsform des erfindungsgemäßen Verfahrens eine höhere Präzision bei der Kantenbesäumung aufgrund des ruhenden Coils erreicht werden.

Besonders einfach konnten rechtwinklige Metallbandkanten dadurch erhalten werden, dass die Stirnseite des Coils gefräst wird, wobei das Fräsen vorzugsweise unter Verwendung eines Planmesserkopfes erfolgt, dessen Rotationsachse senkrecht zur Fläche der Stirnseite des Coils oder parallel zur Metallbandebene ausgerichtet ist.

Weist das zu besäumende Metallband eine Dicke von 1 bis 10 mm auf, können insbesondere die typischen Banddicken, welche Warmbänder nach dem Warmwalzen aufweisen, mit dem erfindungsgemäßen Verfahren besäumt werden.

Obwohl das erfindungsgemäße Verfahren für alle Metalle vorteilhaft ist, zeigen sich bei der Besäumung eines Aluminiumbandes, insbesondere eines Warmbandes aus einer Aluminiumlegierung besondere Vorteile. Beispielsweise unter Anwendung des neuartigen Besäumungsverfahren Warmbänder aus hochfesten, hoch magnesiumhaltigen Aluminiumlegierungen sehr gut kaltgewalzt werden, ohne dass ein erhöhtes Prozessrisiko aufgrund von Bandkantenrissen besteht. Das Kaltwalzen von Warmbändern aus hoch magnesiumhaltigen Aluminiumlegierungen war bis dahin nämlich problematisch und führte häufig zu verminderter Bandqualität durch Bandkantenrisse.

Gemäß einer zweiten Lehre der vorliegenden Erfindung wird die oben aufgezeigte Aufgabe durch eine Vorrichtung zur Bearbeitung einer Kante eines Metallbandes dadurch gelöst, dass Mittel zur spanabhebenden Besäumung vorgesehen sind.

Wie bereits zuvor ausgeführt, wird mit der erfindungsgemäßen Vorrichtung zur spanabhebenden Besäumung der Metallbandkante, anders als bei der bisher verwendeten Rollschertechnik, eine von Bruchzonen und Einzugszonen freie Metallbandkante erzeugt, die eine optimale Weiterverarbeitung des Metallbandes in einem nächsten Walzschritt zulässt.

Bei einer ersten Ausgestaltung der erfindungsgemäßen Vorrichtung sind eine Abwickelhaspel und eine Aufwickelhaspel und optional Mittel zur Dickenreduzierung des Metallbandes vorgesehen, wobei die Mittel zur spanabhebenden Besäumung der Metallbandkante in Bandlaufrichtung nach der Abwickelhaspel angeordnet sind. Das Metallband wird nach dem Abwickeln von der Abwickelhaspel spanabhebend besäumt und optional den Mitteln zur Dickenreduzierung zugeführt. Die spanabhebende Besäumung kann also inline mit einem Walzschritt, vorzugsweise einem Kaltwalzschritt, erfolgen. Andererseits kann auch lediglich ein Abwickeln und Aufwickeln auf ein Coil für die Besäumung der Metallbandkante genutzt werden. Die Besäumung in abgewickeltem Zustand benötigt aber grundsätzlich keine neue separate Vorrichtung.

Gemäß einer hierzu alternativen Ausführungsform sind in einer erfindungsgemäßen Vorrichtung eine Aufnahme für ein Coil eines Metallbandes, Mittel zur spanabhebenden Bearbeitung mindestens einer Stirnseite des Coils sowie Mittel zur Durchführung einer Relativbewegung der Mittel zur spanabhebenden Besäumung der Stirnseite des Coils und dem Coil vorgesehen. Als Relativbewegung kann eine Drehung des Coils durchgeführt werden, wobei die Mittel zur spanabhebenden Besäumung in Bezug auf die Drehbewegung des Coils ortsfest sind, jedoch von dem äußeren Rand einer Stirnseite des Coils zum Zentrum des Coils bewegt werden können. Andere Relativbewegungen zwischen der Stirnseite des Coils und den Mitteln zur spanabhebenden Besäumung des Coils sind ebenfalls möglich und denkbar, um die gesamte Stirnseite des Coils spanabhebend zu Besäumen.

Gemäß einer weiteren Ausführungsform der erfindungsgemäßen Vorrichtung sind eine als Ablagevorrichtung für mindestens ein Coil ausgebildete Aufnahme mit einer Umfangsfixierung sowie Mittel zur Durchführung einer Relativbewegung der Mittel zur spanabhebenden Bearbeitung und dem Coil vorgesehen. Das Coil ist über die als Ablagevorrichtung ausgebildete Aufnahme und die Umfangsfixierung fest fixiert und ortsfest. Die Relativbewegung des spanabhebenden Mittels wird beispielsweise vom äußeren Rand einer Stirnseite des Coils zum Zentrum des Coils durch mindestens eine oder mehrere kreisförmige Bahnen oder eine spiralförmige Bahn erzeugt. Andere Bahnen der spanabhebenden Mittel sind jedoch auch denkbar. Aufgrund des ruhenden Coils zeichnet sich diese Ausführungsform durch eine höhere Präzision in der Kantenbearbeitung aus.

Eine vorteilhafte Ausgestaltung der erfindungsgemäßen Vorrichtung wird dadurch erreicht, dass Mittel zum Fräsen vorgesehen sind. Es hat sich herausgestellt, dass ein rotierender Fräskopf, vorzugsweise ein Planmesserkopf, besonders gute Ergebnisse beim Fräsen der Stirnseite eines Coils erzielt, wenn die Drehachse des Fräskopfes senkrecht zur Stirnseitenfläche angeordnet ist. Andere Fräser können beispielsweise bei der Besäumung des Metallbandes im abgewickelten Zustand verwendet werden.

Beispielsweise sind Aluminiumspäne problematisch in der Fertigung und stellen ein Brand- und damit ein Sicherheitsrisiko dar. Die erfindungsgemäße Vorrichtung kann daher dadurch verbessert werden, dass Mittel zum Abtransport des abgetragenen Metalls vorgesehen sind. Der kontrollierte Abtransport der Späne ist insofern hinsichtlich der Sicherheitsbestimmungen und der Prozesssicherheit von Vorteil.

Es gibt nun eine Vielzahl von Möglichkeiten, das erfindungsgemäße Verfahren sowie die erfindungsgemäße Vorrichtung auszugestalten und weiterzubilden. Hierzu wird verwiesen einerseits auf die den Patentansprüchen 1 und 12 nachgeordneten Patentansprüche sowie auf die Beschreibung von Ausführungsbeispielen in Verbindung mit der Zeichnung. Die Zeichnung zeigt in
- Fig. 1: in einer schematischen Seitenansicht ein Ausführungsbeispiel einer erfindungsgemäßen Vorrichtung zur Durchführung des erfindungsgemäßen Verfahrens mit Drehung des Coils,
- Fig. 2: eine schematische Draufsicht auf das Ausführungsbeispiel aus Fig. 1,
- Fig. 3: in einer schematischen Seitenansicht ein zweites Ausführungsbeispiel einer erfindungsgemäßen Vorrichtung mit Direktbearbeitung der Kante,
- Fig. 4: eine schematische Seitenansicht eines Ausführungsbeispiels einer erfindungsgemäßen Vorrichtung zur Durchführung des erfindungsgemäßen Verfahrens ohne Drehung des Coils und
- Fig. 5: eine schematische Draufsicht auf das Ausführungsbeispiel aus Fig. 4.

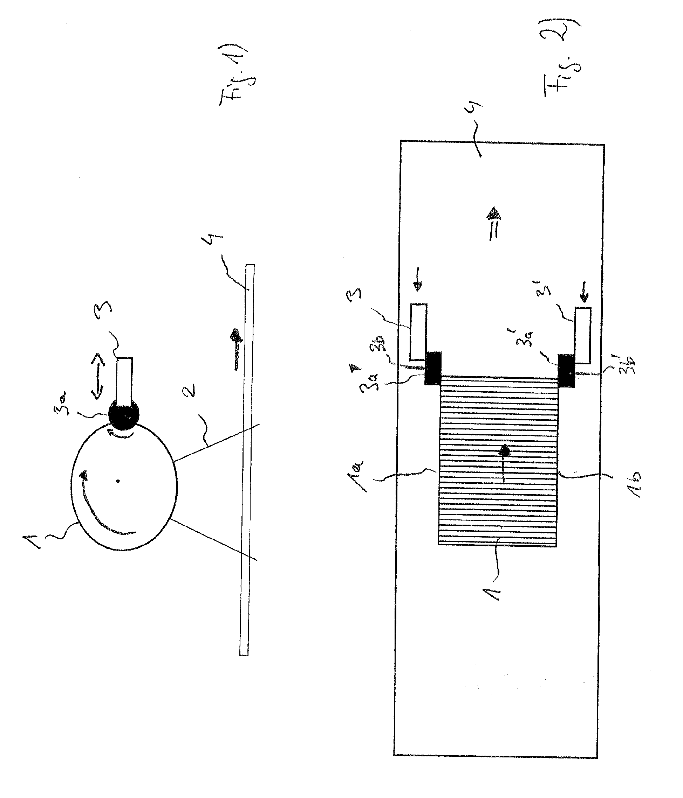

In Fig. 1 ist zunächst ein Ausführungsbeispiel einer erfindungsgemäßen Vorrichtung dargestellt, in welcher die spanabhebende Besäumung des Metallbandes im Coil erfolgt. Das Metallband, beispielsweise ein magnesiumhaltiges Aluminiumband ist als Coil 1 aufgewickelt. Die dargestellte Vorrichtung weist eine Aufnahme 2 für das Coil 1 auf. Die Mittel zur spanabhebenden Besäumung des Metallbandes 3 können gegenüber dem Coil 1 relativ bewegt werden. Im dargestellten Ausführungsbeispiel kann der schematisch skizzierte Fräskopf 3a, beispielsweise ein Planmesserkopf an der Stirnseite des Coils eine Frästiefe von 1 mm bis 3 mm erzeugen und die Metallbandkante des Coils 1 besäumen. Das Coil 1 wird hierzu gedreht und gleichzeitig der Fräskopf 3a zur Mitte des Coils 1 bewegt. Die dabei anfallenden Späne werden durch die Abtransportmittel 4 in Pfeilrichtung abtransportiert und weiterverwertet.

Mit dieser erfindungsgemäßen Vorrichtung kann die Besäumung des Metallbandes mit hoher Geschwindigkeit im Coil 1 erfolgen, wobei gleichzeitig eine Integration in den vorhandenen Fertigungsprozess aufgrund der Verwendung einer separaten Vorrichtung ohne weiteres möglich ist, denn nach abschließendem Warmwalzen sind die Warmbänder üblicherweise bereits zu einem Coil 1 aufgewickelt und werden bis zum Kaltwalzen zwischengelagert.

Die Vorrichtung aus Fig. 1 zeigt die Fig. 2 in einer schematischen Aufsicht. Wie zu erkennen ist, werden beide Stirnseiten 1a, 1b des Coils 1 unter Verwendung der Besäumungsmittel 3, 3', welche einen Fräskopf 3a, 3a' aufweisen, besäumt. Die Rotationsachsen 3b, 3b' der Fräsköpfe 3a, 3a' stehen im Wesentlichen senkrecht zur Ebene der Stirnseiten 1a, 1b. Allerdings ist auch vorstellbar, einen anderen Winkel der Rotationsachsen 3b, 3b' zu den Stirnseiten 1a, 1b einzustellen.

Die Mittel 4 zum Abtransport der Späne sind so angeordnet, dass die vom Fräskopf 3a bzw. 3a' herabfallenden Späne unmittelbar aus dem Arbeitsbereich abtransportiert werden, so dass eine hohe Arbeitssicherheit beim Besäumen des Aluminiumbandes gewährleistet ist.

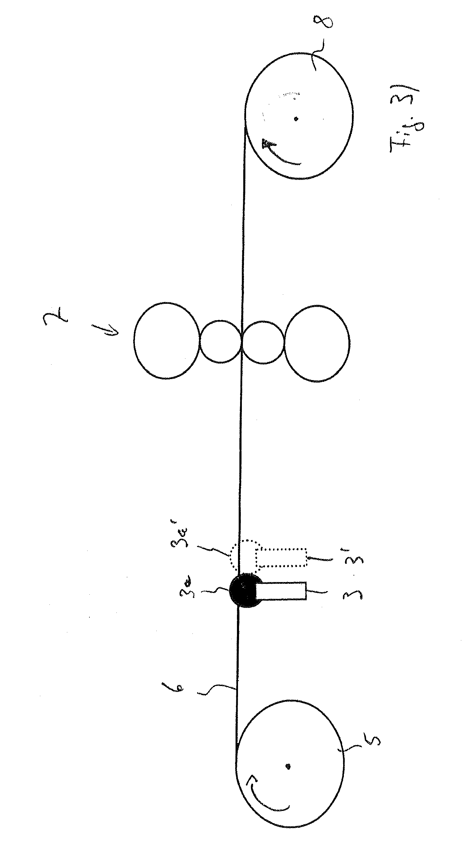

Fig. 3 zeigt in einer schematischen Seitenansicht als alternatives Ausführungsbeispiel einer erfindungsgemäßen Vorrichtung zur spanabhebenden Besäumung der Metallbandkante am abgewickelten Band eine Kaltwalzstraße mit einer Abwickelhaspel 5, von welcher ein Metallband 6 abgewickelt wird. Das Metallband 6 durchläuft die Mittel zur Besäumung 3 und 3', welche die Metallbandkanten des abgewickelten Metallbandes spanabhebend besäumen, so dass eine ideale Metallbandkante erzielt wird. Metallbandführungsmittel sind in Fig. 3 der Einfachheit halber nicht dargestellt.

Wie bereits zuvor bei dem spanabhebenden Besäumen des Metallbandes im Coil verwendet auch diese Vorrichtung Fräsköpfe 3a, 3a', welche die zur spanabhebenden Bearbeitung verwendeten rotierenden Schneiden bereitstellen. Das Metallband 6 durchläuft dann anschließend die Arbeitswalzen 7 der Kaltwalzstraße, an dessen Ende das Metallband 6 auf einem Aufwickelcoil 8 aufgewickelt wird. Prinzipiell muss sich kein Walzschritt an die spanabhebende Besäumung des Metallbandes anschließen, so dass das Walzgerüst 7 nur optional ist. Andererseits würde ein erneutes Abwickeln und Aufwickeln alleine zum Besäumen des Metallbandes einen zusätzlichen Arbeitsaufwand erzeugen.

Unabhängig davon, ob die Metallbandkante integriert in der Walzstraße oder auch in einer getrennten Vorrichtung im Coil spanabhebend besäumt wird, wird der nachfolgende Walzschritt mit deutlich höherer Prozesssicherheit durchgeführt, da Bandkantenrisse und Bandabrisse, vor allem bei Bändern aus Aluminium oder einer Aluminiumlegierung, aufgrund der optimierten Metallbandkante deutlich seltener auftreten. Die weitere Minimierung des Materialverlusts und die Steigerung der Abwalzgrade ergeben deutliche wirtschaftliche Vorteile bei Verwendung des erfindungsgemäßen Verfahrens.

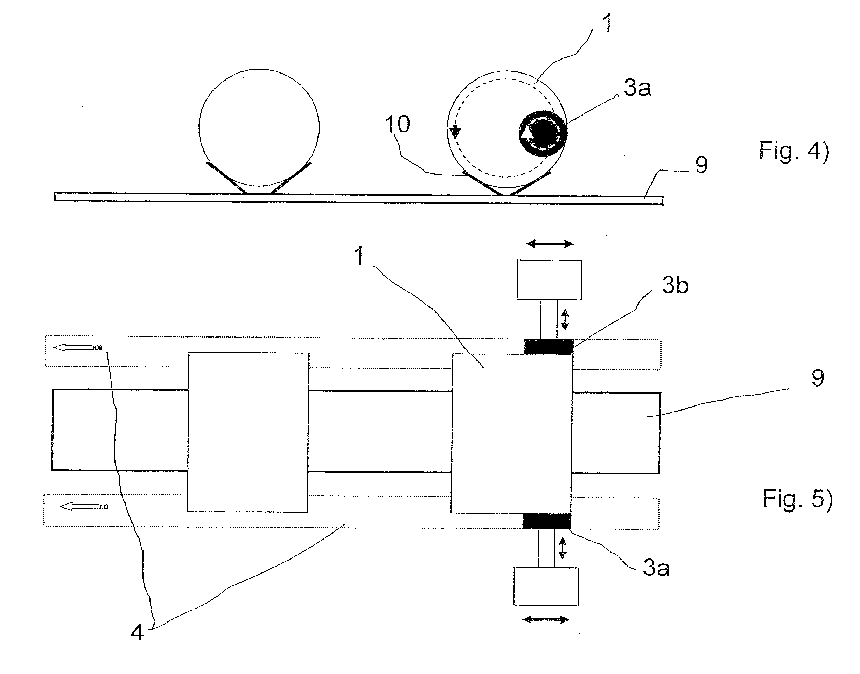

Fig. 4 und Fig. 5 zeigen ein weiteres Ausführungsbeispiel einer erfindungsgemäßen Vorrichtung zur spanabhebenden Besäumung des Metallbandes am Coil. Das zum Coil 1 gewickelte Metallband, beispielsweise ein magnesiumhaltiges Aluminiumband wird auf einer als Ablagevorrichtung 9 ausgebildeten Aufnahmevorrichtung für das Coil am Umfang abgelegt und über Mittel zur Umfangsfixierung 10 fixiert.

Die Mittel zur spanabhebenden Besäumung des Metallbandes können gegenüber dem Coil 1 relativ bewegt werden. Im dargestellten Ausführungsbeispiel kann der schematisch skizzierte Fräskopf 3a, beispielsweise ein Planmesserkopf an der Stirnseite des Coils eine Frästiefe von 1 mm bis 3 mm erzeugen und die Metallbandkante des Coils 1 besäumen. Dabei bearbeitet der Fräskopf 3a und 3b das Coil auf einer kreisförmigen Bahn. Die dabei anfallenden Späne werden durch die Abtransportmittel 4 in Pfeilrichtung abtransportiert und weiterverwertet. Vorteil vom Verfahren gemäß Fig. 4 gegenüber Fig. 1 ist eine größere Genauigkeit des Fräsergebnisses durch das ruhende Coil 1.

Mit dieser erfindungsgemäßen Vorrichtung kann die Besäumung des Metallbandes mit hoher Geschwindigkeit im Coil 1 erfolgen, wobei gleichzeitig eine Integration in den vorhandenen Fertigungsprozess aufgrund der Verwendung einer separaten Vorrichtung ohne weiteres möglich ist, denn nach abschließendem Warmwalzen sind die Warmbänder üblicherweise bereits auf einem Coil 1 aufgewickelt und werden bis zum Kaltwalzen zwischengelagert.

## Patentansprüche

1. Verfahren zur Herstellung eines Metallbandes, bei welchem das Metallband mindestens einem Kaltwalzschritt unterzogen wird,
**dadurch gekennzeichnet, dass** die Kante des Metallbandes vor dem Kaltwalzschritt durch ein spanabhebendes Verfahren besäumt wird.

2. Verfahren nach Anspruch 1,
**dadurch gekennzeichnet, dass** die spanabhebende Besäumung der Kante des Metallbandes durch Fräsen erfolgt.

3. Verfahren nach Anspruch 1 oder 2,
**dadurch gekennzeichnet, dass** die Kante des Metallbandes nach dem spanabhebenden Besäumen rechtwinklig ist.

4. Verfahren nach einem der Ansprüche 1 bis 3,
**dadurch gekennzeichnet, dass** die Tiefe der Besäumung kleiner 3 mm, vorzugsweise 1 mm bis 2 mm beträgt.

5. Verfahren nach einem der Ansprüche 1 bis 4,
**dadurch gekennzeichnet, dass** das Metallband vor dem Besäumen mindestens einem Warmwalzstich unterzogen wurde.

6. Verfahren nach einem der Ansprüche 1 bis 5,
**dadurch gekennzeichnet, dass** die spanabhebende Besäumung der Kante im Coil des Metallbandes oder am abgewickelten Metallband erfolgt.

7. Verfahren einem der Ansprüche 1 bis 6,
**dadurch gekennzeichnet, dass** die spanabhebende Besäumung der Kante des Metallbandes inline mit einem nächsten Walzschritt erfolgt.

8. Verfahren einem der Ansprüche 1 bis 6,
**dadurch gekennzeichnet, dass** die spanabhebende Besäumung am Coil des Metallbandes durchgeführt wird, wobei das Coil des Metallbandes in Rotation versetzt wird und die Kante des Metallbandes auf einer oder beiden Stirnseiten des Coils spanabhebend besäumt wird.

9. Verfahren einem der Ansprüche 1 bis 6,
**dadurch gekennzeichnet, dass** die spanabhebende Besäumung am Coil des Metallbandes durchgeführt wird, wobei das Coil des Metallbandes fixiert ist und die Kante des Metallbandes auf einer oder beiden Stirnseiten des Coils spanabhebend besäumt wird.

10. Verfahren nach Anspruch 8 und 9,
**dadurch gekennzeichnet, dass** die Stirnseite des Coils gefräst wird, wobei das Fräsen vorzugsweise unter Verwendung eines Planmesserkopfes erfolgt, dessen Rotationsachse senkrecht zur Fläche der Stirnseite ausgerichtet ist.

11. Verfahren nach einem der Ansprüche 1 bis 10,
**dadurch gekennzeichnet, dass** das zu besäumende Metallband eine Dicke von 1 mm bis 10 mm aufweist.

12. Verfahren nach einem der Ansprüche 1 bis 11,
**dadurch gekennzeichnet, dass** ein Metallband bestehend aus einer Aluminiumlegierung, insbesondere ein Warmband bestehend aus einer Aluminiumlegierung besäumt wird.

13. Vorrichtung zur Besäumung einer Kante eines Metallbandes zur Durchführung eines Verfahrens nach einem der Ansprüche 1 bis 12,
**dadurch gekennzeichnet, dass** Mittel (3a,3a') zur spanabhebenden Besäumung der Metallbandkante vorgesehen sind.

14. Vorrichtung nach Anspruch 13,
**dadurch gekennzeichnet, dass** eine Abwickelhaspel (5) und eine Aufwickelhaspel (8) und optional Mittel (7) zur Dickenreduzierung des Metallbandes (6) vorgesehen sind, wobei Mittel zur spanabhebenden Besäumung der Metallbandkante (3, 3') in Bandlaufrichtung nach der Abwickelhaspel (5) angeordnet sind.

15. Vorrichtung nach Anspruch 13,
**dadurch gekennzeichnet, dass** eine Aufnahme (2) für ein Coil (1) eines Metallbandes, Mittel zur spanabhebenden Besäumung (3,3') mindestens einer Stirnseite (1a, 1a') des Coils sowie Mittel zur Durchführung einer Relativbewegung der Mittel zur spanabhebenden Besäumung (3,3') und dem Coil (1) vorgesehen sind.

16. Vorrichtung nach Anspruch 15,
**dadurch gekennzeichnet, dass** eine als Ablagevorrichtung (9) für mindestens ein Coil (1) ausgebildete Aufnahme mit einer Umfangsfsxierung (10) sowie Mittel zur Durchführung einer Relativbewegung der Mittel zur spanabhebenden Besäumung (3,3') und dem Coil (1) vorgesehen sind.

17. Vorrichtung nach einem der Ansprüche 13 bis 16,
**dadurch gekennzeichnet, dass** Mittel zum Fräsen (3a,3a') vorgesehen sind.

18. Vorrichtung nach einem der Ansprüche 13 bis 17,
**dadurch gekennzeichnet, dass** Mittel zum Abtransport des abgetragenen Metalls (4) vorgesehen sind.
